# EUROPÄISCHE PATENTSCHRIFT

(11) **EP 1 536 892 B1**
(45) Veröffentlichungstag und Bekanntmachung des Hinweises auf die Patenterteilung: **26.04.2006**
(21) Anmeldenummer: 03794949.2
(22) Anmeldetag: 27.08.2003
(51) Int. Cl.: B02C 13/16, B02C 13/284, B03B 9/06

(54) **ZERKLEINERUNGSVORRICHTUNG**
COMMINUTING DEVICE
DISPOSITIF DE BROYAGE

(30) Priorität: 29.08.2002 DE 10239820
(43) Veröffentlichungstag der Anmeldung: 08.06.2005
(73) Patentinhaber: BHS-Sonthofen GmbH, 87527 Sonthofen (DE)
(72) Erfinder: SCHWEIGER, Helmut, 8505 St. Nilkolai Im Sausal (AT); PIENZ, Alwin, 87527 Sonthofen (DE); MÜLLER, Gert, 87477 Moosbach (DE); SCHMANDRA, Angelo, 87527 Sonthofen (DE)
(74) Vertreter: Herzog, Markus
(86) Internationale Anmeldenummer: PCT/EP2003/009484
(87) Internationale Veröffentlichungsnummer: WO 2004/024331

(56) Entgegenhaltungen:
- EP-A- 0 556 645
- EP-A- 0 606 891
- EP-A- 0 778 086
- GB-A- 1 572 330
- US-A- 1 212 419
- US-A- 2 082 419
- US-A- 3 891 152
- US-A- 4 637 561
- US-A- 5 785 583
- US-A- 5 944 268

## Beschreibung

Die Erfindung betrifft eine Zerkleinerungsvorrichtung, welche einen Zerkleinerungsraum mit einer Bodenwandung und einer von der Bodenwandung nach oben abstehenden Umfangswandung umfasst, wobei ferner eine im Wesentlichen orthogonal zur Bodenwandung verlaufende drehantreibbare Antriebswelle und wenigstens ein der Bodenwand benachbart angeordnetes, von der Antriebswelle in eine Umlaufbewegung um die Antriebswelle versetzbares Zerkleinerungselement vorgesehen sind.

Derartige Zerkleinerungsvorrichtungen werden zunehmend bei der Rückgewinnung von Rohstoffen eingesetzt. Insbesondere kann es sich dabei um Materialverbunde handeln, wie sie beispielsweise bei der Recycling-Aufbereitung von Elektro- und Elektronik-Geräten bzw. -baugruppen auftreten, um Recycling-Monomaterialien aus Eisen-Metallen, Nicht-Eisen-Metallen, Kunststoffen oder Holz, um Fraktionen aus vorgeschalteten anderen Grob-Zerkleinerungsprozessen in der Recycling-Industrie oder um Schlacken aus Verbrennungsprozessen.

Eine Zerkleinerungsvorrichtung ist beispielsweise aus der EP 0 606 891 B1 bekannt. Diese Zerkleinerungsvorrichtung umfasst einen Zerkleinerungsraum, in dem ein Rotor mit vertikaler Welle angeordnet ist. An dieser vertikalen Welle sind der Bodenwandung des Zerkleinerungsraums unmittelbar benachbart zwei Ketten als Zerkleinerungselemente angebracht. Der Zerkleinerungsraum wird durch eine im Bereich seiner Deckenwandung vorgesehene Öffnung mit zu zerkleinerndem Gut beschickt. Ist das Gut in dem gewünschten Maße zerkleinert worden, so wird eine der Bodenwandung benachbart angeordnete Klappe in der Umfangswandung des Zerkleinerungsraums geöffnet, um das zerkleinerte Gut auszutragen. Nachteilig ist an dieser bekannten Zerkleinerungsvorrichtung, dass das zu zerkleinernde Gut nur chargenweise zerkleinert werden kann, d.h. dass der Zerkleinerungsprozess diskontinuierlich abläuft.

Eine weitere Zerkleinerungsvorrichtug auf die der Oberbegriff des Anspruchs 1 basiert, ist aus EP-A-0556645 bekannt.

Demgegenüber ist es Aufgabe der Erfindung, eine Zerkleinerungsvorrichtung der oben genannten Art bereitzustellen, welche kontinuierlich betrieben werden kann, sowie bei Überlasting oder Blockieren der Zerkleinerungsvorrichtung, oder bei üsbermößiger Ansammlung von nicht ausreichend zerkleinertem Gut ein schnelles Entleeren des Zerkleinerungsraumes ermöglicht.

Diese Aufgabe wird erfindungsgemäß durch eine Zerkleinerungsvorrichtung mit den kennzeichnenden Merkmalen von Anspruch 1 gelöst.

Da die erfindungsgemäße Zerkleinerungsvorrichtung zudem vorzugsweise zur Vorzerkleinerung des zu zerkleinernden Gutes eingesetzt wird und die Haupt- bzw. Endzerkleinerung des von ihr zerkleinerten Gutes in einer von der Anmelderin unter der Bezeichnung "Rotorprallmühle RPMV" vertriebenen Zerkleinerungsvorrichtung stattfindet, ist es tolerierbar, wenn gelegentlich auch einmal ein nicht ausreichend zerkleinertes Objekt aus der erfindungsgemäß Zerkleinerungsvorrichtung ausgetragen wird. Dieses Objekt kann auf Grund seiner Größe in einfacher Weise aus dem Austragsgut ausgesondert und der Zerkleinerungsvorrichtung zur erneuten Vorzerkleinerung zugeführt werden.

Um den Austrag von zu großen Objekten in einfacher Weise verhindern zu können, ist zumindest ein Teil der Umfangswandung als Rost ausgebildet ist. Dieser Rost, der aus einer Mehrzahl von, vorzugsweise vertikal verlaufenden, Leisten gebildet sein kann, die mit einem vorbestimmten Abstand voneinander angeordnet sind, dient als Sieb, das die Größe des aus der erfindungsgemäßen Zerkleinerungsvorrichtung ausgetragenen Gutes bestimmt. Das Austragsgut aus der erfindungsgemäßen Zerkleinerungsvorrichtung ist insbesondere dann als Aufgabegut für die Rotorprallmühle RPMV geeignet, wenn der vorbestimmte Abstand einen Wert von etwa 38 mm aufweist. Um dem "Beschuss" des zu zerkleinernden Gutes widerstehen, d.h. den Verschleiß der Rostleisten mindern zu können, können die Leisten aus verschleißfestem Stahl oder aus Gussmaterial gefertigt sein.

Um eine kontrollierte Ausleitung des durch den Rost hindurchgetretenen Gutes sicherstellen zu können, ist der Rost von einem äußeren Mantel umgeben Um verhindern zu können, dass sich Drähte oder ähnlich feine Objekte in dem Zwischenraum zwischen dem Rost und dem äußeren Mantel festsetzen können, wird vorgeschlagen, dass der äußere Mantel vom Rost einen vorbestimmten Mindestabstand aufweist, der beispielsweise etwa 200 mm beträgt. In dem Zwischenraum zwischen dem Rost und dem äußeren Mantel kann das zerkleinerte Gut zu einer am unteren Ende des äußeren Mantels vorgesehenen, vorzugsweise trichterförmig ausgebildeten Auffangvorrichtung für zerkleinertes Gut hinunterfallen. Aus dieser Auffangvorrichtung kann das zerkleinerte Gut dann beispielsweise nach unten ausgetragen werden.

Neben der Umfangswandung kann auch die Bodenwandung zumindest teilweise als Rost ausgebildet sein. Auch das durch diesen Bodenrost hindurchtretende zerkleinerte Gut kann über die trichterförmige Auffangvorrichtung aus der Zerkleinerungsvorrichtung ausgetragen werden.

Zusätzlich zu dem Austrag über die trichterförmige Auffangvorrichtung ist in der Umfangswandung eine der Bodenwandung benachbarte, wahlweise öffenbare und schließbare Öffnung vorgesehen.

Diese Öffnung ist als zusätzliche Austragsöffnung zu nutzen. In jedem Fall kann diese Austragsöffnung aber zur Entleerung des Zerkleinerungsraums bei Überlastung des Antriebs bzw. bei Blockieren der Antriebswelle genutzt werden. Zum wahlweisen Öffnen und Schließen der Öffnung kann ein Schieber vorgesehen sein, der beispielsweise mittels eines Hydraulikzylinders motorisch betätigbar ist. Die Größe des durch den Schieber freigegebenen Spalts dieser Öffnung kann zur Beeinflussung der Größe des ausgetragenen Gutes bzw. zur Beeinflussung der Verweilzeit des zu zerkleinernden Gutes in dem Zerkleinerungsraum eingesetzt werden. Die Steuerung der Größe dieses Spalts kann in den Gesamt-Steuerungsprozess der Zerkeinerungsvorrichtung integriert werden.

Zur Erleichterung von Montage- und Wartungsarbeiten am Rost oder/und den Zerkleinerungselementen kann vorgesehen sein, dass wenigstens ein Umfangsabschnitt des äußeren Mantels, vorzugsweise um eine im Wesentilichen vertikal verlaufende Achse, schwenkbar angeordnet ist oder/und dass wenigstens ein Umfangsabschnitt des Rostes, vorzugsweise um eine im Wesentlichen vertikal verlaufende Achse, schwenkbar angeordnet ist oder/und dass ein schwenkbarer Umfangsabschnitt des Rostes und ein schwenkbarer Umfangsabschnitt des äußeren Mantels eine gemeinsam handhabbare Einheit bilden. Diese Schwenkbarkeit kann in konstruktiv und herstellungstechnisch einfacher Weise bereitgestellt werden, wenn der äußere Mantel eine polygonale, vorzugsweise eine achteckige, Kontur aufweist. Im Falle einer achteckigen Kontur kann beispielsweise im Bereich von sechs der acht Seiten der Zerkleinerungsvorrichtung ein Rost vorgesehen sein, während an den beiden anderen, einander vorzugsweise diametral gegenüberliegenden Seiten Funktionsteile vorgesehen sein können, beispielsweise die Zufuhröffnung zur Zufuhr von zu zerkleinerndem Gut und die Austragsöffnung, welche das vollständige Entleeren des Zerkleinerungsraums ermöglicht.

Wie dies an sich aus der EP 0 606 891 B1 bekannt ist, kann wenigstens ein Zerkleinerungselement, vorzugsweise das der Bodenwandung benachbarte Zerkleinerungselement, von einer Kette gebildet sein. Eine Zerkleinerungskette hat den Vorteil, dass sie erforderlichenfalls nach oben ausweichen kann, was den Verschleiß an der Bodenwandung mindert.

Darüber hinaus ist es jedoch auch möglich, dass wenigstens ein Zerkleinerungselement von einer Schlagleiste gebildet ist. Schlagleisten haben verglichen mit Schlagketten den Vorteil, dass sie das zu zerkleinernde Gut mit größerer Wucht treffen und somit effektiver zerkleinern. Um notfalls ein Ausweichen der Schlagleisten ermöglichen und somit deren Abbrechen verhindern zu können, kann zudem vorgesehen sein, dass die Schlagleiste mit der Antriebswelle gelenkig, vorzugsweise um eine zur Antriebswelle vorzugsweise parallel verlaufende Achse schwenkbar, verbunden ist.

Wenn die Zerkleinerungselemente an der Antriebswelle schraubenartig angeordnet sind, und zwar vorzugsweise derart, dass ein der Bodenwandung näheres Zerkleinerungselement relativ zu einem von der Bodenwandung entfernteren Zerkleinerungselement in Umlaufrichtung um die Antriebswelle vorauslaufender angeordnet ist, so können die Zerkleinerungselemente zusammenwirkend auf das zu zerkleinernde Gut eine der Schwerkraft entgegengerichtete Kraft ausüben. Dies führt zu einer längeren Verweildauer des zu zerkleinernden Gutes in dem Zerkleinerungsraum und somit zu dessen besserer Zerkleinerung. Die Antriebswelle kann hierzu beispielsweise als Sechskantwelle ausgebildet sein.

In Weiterbildung der Erfindung wird vorgeschlagen, dass die Zerkleinerungselemente an der Antriebswelle in Zerkleinerungselement-Ebenen angeordnet sind, welche voneinander einen vorbestimmten Mindestabstand aufweisen, der beispielsweise etwa 120 mm betragen kann. Dabei sorgt der vorbestimmte Mindestabstand zum einen dafür, dass die Halterung der Zerkleinerungselemente an der Antriebswelle ausreichend stabil ausgeführt sein kann, und zum anderen dafür, dass sich auch größere Brocken des zu zerkleinernden Gutes zwischen den Zerkleinerungselementen allmählich zur Bodenwandung hin bewegen können. Hierdurch ist sichergestellt, dass alle Zerkleinerungselemente zur Zerkleinerung beitragen können und somit gleichmäßig abnutzen.

Ist zwischen dem freien Ende wenigstens eines der Zerkleinerungselemente und der Umfangswandung ein vorbestimmter Abstand vorgesehen, so kann hierdurch das Risiko eines Verklemmens bzw. Verkeilens des zu zerkleinernden Gutes zwischen den Zerkleinerungselementen und der Umfangswandung reduziert werden, was sich auf den Verschleiß der Umfangswandung günstig auswirkt, insbesondere wenn diese als Rost ausgebildet ist.

Wenn wenigstens ein von der Umfangswandung nach innen abstehender, vorzugsweise trichterförmig ausgebildeter, Ringansatz vorgesehen ist, so kann das Gut, das in dem zwischen dem freien Ende der Zerkleinerungselemente und der Umfangswandung bestehenden Spalt nach unten fällt, wieder in die Reichweite der Zerkleinerungselemente zurückgeführt werden. Zudem kann der Ringansatz als Schutz für die Befestigungselemente, vorzugsweise Schraubbolzen,eingesetzt werden, mit welchen die Rostleisten an einem sie halternden gebogenen Flacheisen befestigt sind.

In an sich bekannter Weise kann im Bereich des oberen Randes der Umfangswandung eine Zufuhröffnung zur Zufuhr von zu zerkleinerndem Gut vorgesehen sein. Dabei kann sich die Zuführöffnung vom oberen Rand der Umfangswandung über eine vorbestimmte Distanz in Richtung Bodenwandung erstrecken. Hierdurch kann das zu zerkleinernde Gut zumindest teilweise seitlich in den Zerkleinerungsraum eingebracht werden, was unter Berücksichtigung der Bauhöhe der Zerkleinerungsvorrichtung selbst sowie der Größe des zu zerkleinernden Gutes die im Bereich der erfindungsgemäßen Zerkleinerungsvorrichtung vorzusehende freie Raumhöhe verringert. Wie vorstehend bereits angesprochen, ist die Zuführöffnung vorzugsweise in einem Umfangsbereich der Zerkleinerungsvorrichtung vorgesehen, die nicht mit einem Rost ausgebildet ist.

Um verhindern zu können, dass das zu zerkleinernde Gut beim ersten Kontakt mit einem Zerkleinerungselement durch die Zuführöffnung wieder aus dem Zerkleinerungsraum heraus geschlagen wird, kann in der obersten Zerkleinerungselement-Ebene und gewünschtenfalls auch in wenigstens einer weiteren, darunter angeordneten Zerkleinerungselement-Ebene lediglich ein Zerkleinerungselement vorgesehen sein. Zusätzlich oder alternativ kann zudem zumindest das wenigstens eine oberste Zerkleinerungselement kürzer ausgebildet sein als die restlichen Zerkleinerungselemente. Schließlich kann ein Rückprall von Aufgabegut auch dadurch verhindert werden, dass ein der Zufuhröffnung vorgeordneter Zufuhrkanal abgewinkelt ausgebildet ist.

Um trotz der Vielzahl von Zerkleinerungselementen eine stabile Rotation der Antriebswelle sicherstellen zu können, wird vorgeschlagen, dass die Antriebswelle sowohl an der Bodenwandung als auch an einer Deckenwandung des Zerkleinerungsraums drehbar gelagert ist.

In an sich bekannter Weise kann der Antriebsmotor mit der Antriebswelle über einen Riemenantrieb verbunden sein. Dieser Riemenantrieb kann dabei in einfacher Weise Drehzahlschwankungen der Antriebswelle ausgleichen, welche von der Schlagbelastung hervorgerufen werden, so dass diese Drehzahlschwankungen den Antriebsmotor nicht belasten. Die Drehzahl der Antriebswelle kann zwischen etwa 200 U/min und etwa 2000 U/min, vorzugsweise zwischen etwa 500 U/min und etwa 1000 U/min, betragen.

Schließlich kann auch noch eine Anschlussöffnung für eine Absaugvorrichtung vorgesehen sein, und zwar vorzugsweise in einem Umfangsbereich ohne Rost. Diese Anschlussöffnung kann zudem hinter einer Prallwand angeordnet sein, so dass Drähte und dergleichen Partikel, deren Masse einen vorbestimmten Wert überschreitet, auf Grund Ihrer Trägheit nicht abgesaugt werden.

Die Erfindung wird im Folgenden an einem Ausführungsbeispiel anhand der beigefügten Zeichnungen näher erläutert werden. Es stellt dar:
- Fig. 1: eine Schnittansicht einer erfindungsgemäßen Zerkleinerungsvorrichtung längs der Linie I-I in Fig. 3;
- Fig. 2: eine Schnittansicht einer erfindungsgemäßen Zerkleinerungsvorrichtung längs der Linie II-II in Fig. 3;
- Fig. 3: eine Draufsicht auf eine erfindungsgemäße Zerkleinerungsvorrichtung; und
- Fig. 4: ein Diagramm zur Erläuterung der Einsatzmöglichkeiten der erfindungsgemäßen Zerkleinerungsvorrichtung.

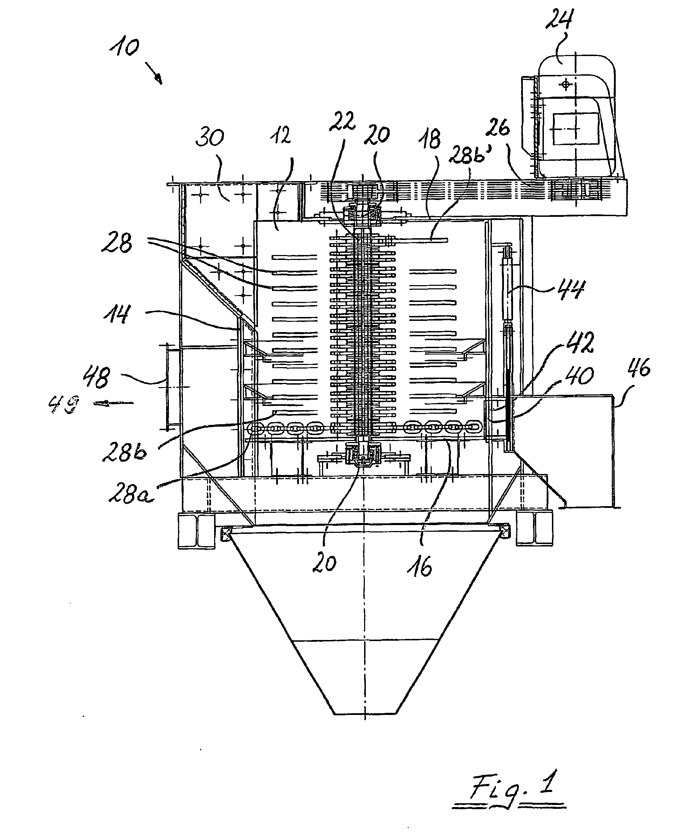

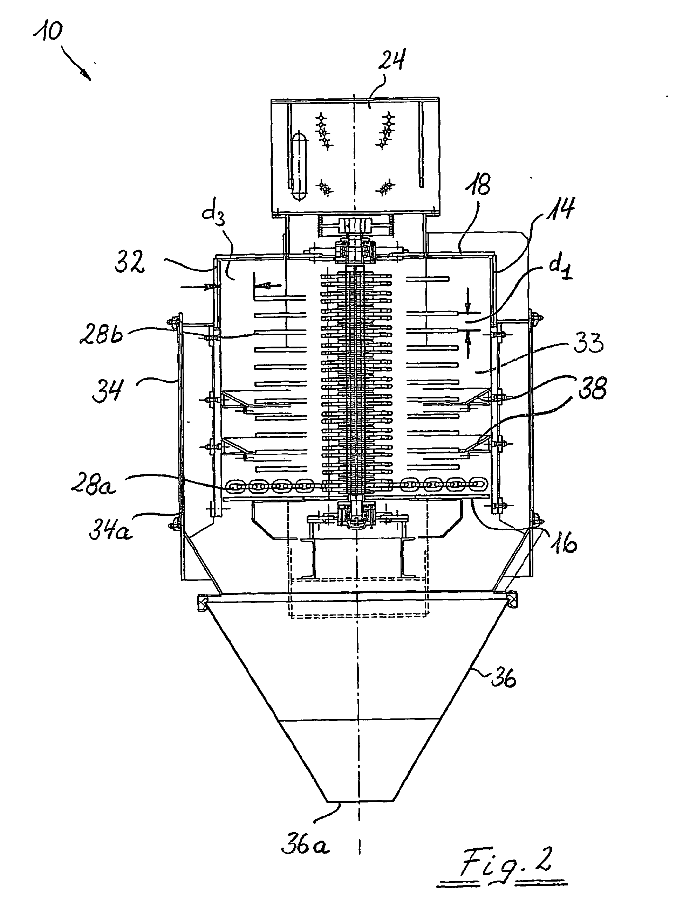

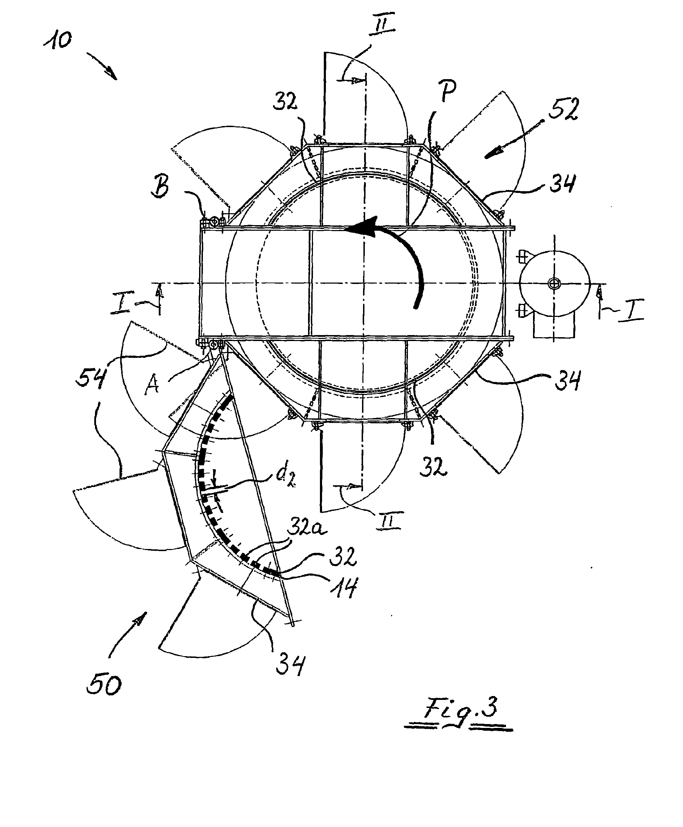

In Fig. 1 ist eine erfindungsgemäße Zerkleinerungsvorrichtung ganz allgemein mit 10 bezeichnet. Sie umfasst einen Zerkleinerungsraum 12, der von einer Umfangswandung 14, einer Bodenwandung 16 und einer Deckenwandung 18 umgrenzt ist. Im Bereich der Bodenwandung 16 und der Deckenwandung 18 sind Lagerstellen 20 für eine Antriebswelle 22 vorgesehen, die von einem Antriebsmotor 24 über einen Riemenantrieb 26 in Richtung des Pfeils P (siehe Fig. 3) angetrieben ist.

An der somit im Wesentlichen vertikal angeordneten Antriebswelle 22 sind eine Mehrzahl von Zerkleinerungselementen 28 paarweise in Zerkleinerungselement-Ebenen übereinander angeordnet. Lediglich die beiden obersten, d.h. der Deckenwandung 18 nächstgelegenen, Zerkleinerungselement-Ebenen weisen nur ein einziges Zerkleinerungselement 28 auf. Die Zerkleinerungselemente der der Bodenwandung 16 nächstgelegenen Zerkleinerungselement-Ebene sind als Schlagketten 28a ausgebildet, während die übrigen Zerkleinerungselemente als Schlagleisten 28b ausgebildet sind. Die Schlagleisten 28b sind an der Antriebswelle 22 fliegend, d.h. um eine zur Antriebswelle 22 im Wesentlichen parallel verlaufende Achse schwenkbar, gehaltert. Dies ist der Übersichtlichkeit der Darstellung halber in Fig. 1 lediglich für die Schlagleiste 28b' der obersten Zerkleinerungselement-Ebene dargestellt. Die Zerkleinerungselement-Ebenen weisen einen Abstand d₁ voneinander auf (siehe Fig. 2).

In der Darstellung gemäß Fig. 1 oben links verfügt der Zerkleinerungsraum 12 über eine Zuführung 30 für das zu zerkleinernde Gut. Damit dieses Gut nichgt gleich beim ersten Kontakt mit den Schlagleisten 28b in die Zuführung 30 zurückprallt, ist in den obersten beiden Zerkleinerungselement-Ebenen jeweils lediglich eine Schlagleiste 28b vorgesehen. In wievielen Zerkleinerungselement-Ebenen lediglich eine Schlagleiste 28b vorgesehen ist, hängt davon ab, wie weit sich die Zuführung 30 über die Höhe der Umfangswandung 14 hinab erstreckt. Darüber hinaus sind die Schlagleisten 28b der obersten Zerkleinerungselement-Ebenen kürzer ausgebildet als die restlichen Schlagleisten. Dies ist in Fig. 1 lediglich für die oberste Schlagleiste 28b' dargestellt. Grundsätzlich können jedoch auch die Schlagleisten 28b mehrerer Zerkleinerungselement-Ebenen verkürzt ausgebildet sein, und zwar vorzugsweise mit einer "tannenbaumartigen" Längenstaffelung. Wieviele Zerkleinerungselement-Ebenen in die Verkürzung der Schlagleisten einbezogen sind, hängt unter anderem davon ab, wie weit sich die Zuführung 30 über den Radius des Zerkleinerungsraums 12 zur Antriebswelle 22 hin erstreckt.

Durch den Kontakt mit den rotierenden Schlagleisten 28b wird das durch die Zuführöffnung 30 in den Zerkleinerungsraum 12 eingegebene Gut zerkleinert. Größere Teile verweilen dabei im Bereich der Zuführung 30, bis sie von den obersten Schlagleisten 28b in Bruchstücke zerlegt worden sind, deren Größe unter anderem vom Abstand d₁ der Zerkleinerungselement-Ebenen, dem Umfangsversatz der Schlagleisten benachbarter Zerkleinerungselement-Ebenen und der Drehzahl der Antriebswelle 22 abhängt. Anschließend bewegen sich diese Bruchstücke schwerkraftbedingt durch die verschiedenen Zerkleinerungselement-Ebenen nach unten, wobei sie durch die Schlagwirkung der Schlagleisten 28b bzw. der Schlagketten 28e weiter zerkleinert werden.

Besonders kleine Bruchstücke werden durch die Schlagwirkung der Schlagleisten 28b radial nach außen gegen die Umfangswand 14 geschleudert. Diese Umfangswand 14 ist, wie in Fig. 3 dargestellt ist, von einem Rost 32 gebildet, der aus einer Mehrzahl vertikal angeordneter Rostleisten 32a zusammengesetzt ist. Die Rostleisten 32a weisen voneinander einen Abstand d₂ auf, so dass Bruchstücke, deren Abmessungen kleiner sind als der Wert d₂, durch den Rost 32 hindurchtreten und den Zerkleinerungsraum 12 verlassen können. Um ein geordnetes Abführen dieses zerkleinerten Gutes gewährleisten zu können, ist die Umfangswandung 14 bzw. der Rost 32 von einem äußeren Mantel 34 umgeben, der an seinem unteren Ende 34a in einen Auffangtrichter 36 mündet. Durch die untere Öffnung 36a des Auffangtrichters 36 wird das zerkleinerte Gut aus der Zerkleinerungsvorrichtung 10 ausgeleitet.

Um eine übermäßige Beanspruchung und somit einen übermäßigen Verschleiß der Rostleisten 32a durch Brocken des zu zerkleinernden Gutes verhindern zu können, ist zwischen den freien Enden der Schlagleisten 28b und der Umfangswandung 14 bzw. dem Rost 32 ein Abstand d₃ vorgesehen. Durch diesen Abstand d₃, der größer bemessen ist als der Abstand d₂ der Rostleisten 32a, besteht jedoch die Gefahr, dass noch nicht ausreichend zerkleinertes Gut am Rost 32 abprallt und zwischen dem Rost 32 und den freien Enden der Schlagleisten 28b zur Bodenplatte 16 hinunterfällt. Dies würde zu einer übermäßigen Beanspruchung der Schlagketten 28a und der untersten Schlagleisten 28b führen. Daher sind in diesem Zwischenraum 33 zwei trichterförmige Ringansätze 38 vorgesehen, welche in diesem Zwischenraum hinabfallendes Gut wieder in den Bereich der Schlagleisten 28b zurückführen. Auf diese Weise kann eine gleichmäßige Abnutzung sämtlicher Zerkleinerungselemente 28 sichergestellt werden.

Sollte es durch falsche Wahl der Betriebsparameter, beispielsweise zu schnelle Zufuhr des zu zerkleinernden Gutes, zu langsame Drehzahl der Antriebswelle 22 oder dergleichen, doch einmal zu einer übermäßigen Ansammlung von nicht ausreichend zerkleinertem Gut im Bereich der Bodenwandung 16 kommen, so kann diese unerwünschte Materialansammlung durch eine seitliche Öffnung 40 aus dem Zerkleinerungsraum 12 ausgeworfen werden. Diese seitliche Öffnung 40 ist mittels einer Klappe 42 verschließbar, welche mittels eines Hydraulikzylinders 44 wahlweise geöffnet oder geschlossen werden kann. Ein Schutzkasten 46 sorgt für einen geordneten Materialauswurf ohne Risiko einer Gefährdung des Betriebspersonals.

Schließlich ist in Fig. 1 auch noch ein Anschluss 48 für eine Absaugvorrichtung 49 dargestellt, welche aus dem Zerkleinerungsraum 12 sowie dem Ringraum 33 zwischen Rost 32 und Außenmantel 34 Staub und dergleichen absaugt.

Wie in Fig. 3 dargestellt ist, weist die erfindungsgemäße Zerkleinerungsvorrichtung 10, d.h. insbesondere deren äußerer Mantel 34 einen achteckigen Querschnitt auf. Dabei sind die drei in Fig. 3 unteren Seitenflächen des Außenmantels 34 und der ihnen zugeordnete Umfangsabschnitt des Rosts 32 zu einer Baueinheit 50 zusammengefasst, die um eine vertikale Achse A von der restlichen Zerkleinerungsvorrichtung 10 abgeschwenkt werden kann, um Wartungs- oder Betriebspersonal Zugang zum Zerkleinerungsraum 12 und insbesondere zur Antriebswelle 20 und zu den Zerkleinerungselementen 28 zu gewähren. Darüber hinaus weist jede der drei Seitenflächen des äußeren Mantels 34 eine Wartungsklappe 54 auf, die nach Abschwenken vom äußeren Mantel 34 Zugang zur Außenseite des Rosts 32 gewährt, beispielsweise um einzelne Rostleisten 32a austauschen zu können. In analoger Weise sind auch die drei oberen Seitenflächen des äußeren Mantels 34 zu einer entsprechenden Baueinheit 52 zusammengefasst, die um die Achse B von der restlichen Zerkleinerungsvorrichtung 10 abgeschwenkt werden kann.

In den den beiden restlichen Seitenflächen des äußeren Mantels 34 zugeordneten Umfangsabschnitten sind der Antriebsmotor 24 einschließlich des Riemenantriebs 26, die Auswurföffnung 40, die Zuführung 30 und der Anschlussstutzen 48 für die Absaugvorrichtung 49 angeordnet. In diesen beiden Umfangsabschnitten ist zudem die Umfangswand 14 durchgehend, d.h. ohne Rost, ausgebildet.

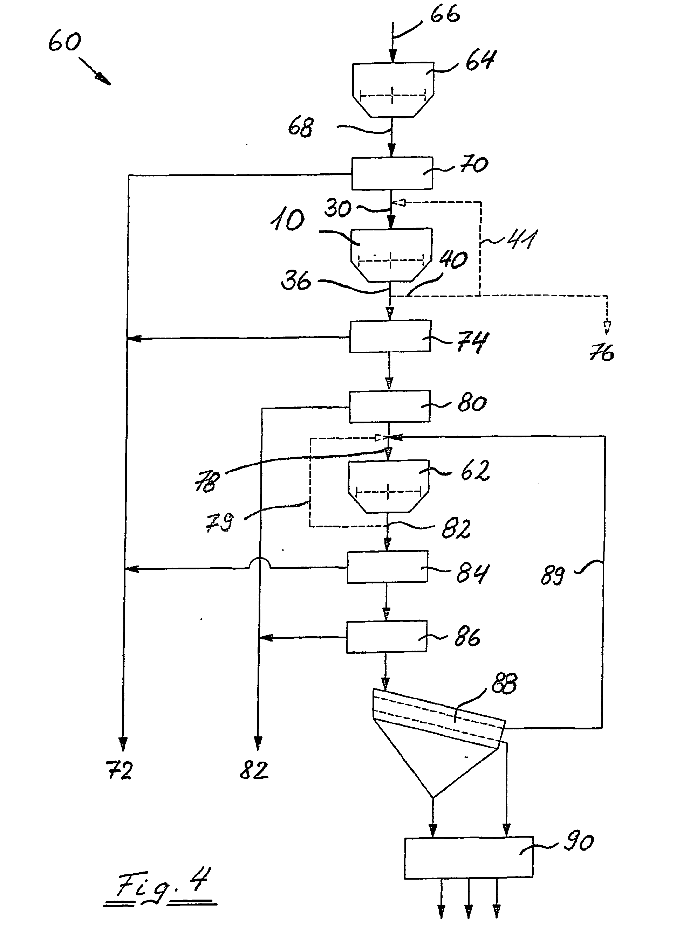

In Fig. 4 ist in Form eines Verfahrensschemas die Konzeption einer Zerkleinerungsanlage 60 dargestellt, die zur Rückgewinnung von Rohstoffen aus Geräten eingesetzt werden kann, welche Materialverbunde umfassen, seien es Kühlschränke, Waschmaschinen, Fernseher, Computer, Kraftfahrzeugteile oder dergleichen Geräte.

Die erfindungsgemäße Zerkleinerungsvorrichtung 10 dient in dieser Anlage 60 zur Vorzerkleinerung des zu zerkleinernden Gutes. Die Endzerkleinerung findet in einer weiteren Zerkleinerungsvorrichtung 62 statt, beispielsweise der von der Anmelderin unter der Bezeichnung "Rotorprallmühle RPMV" vertriebenen Zerkleinerungsvorrichtung. In Abhängigkeit des jeweils zu zerkleinernden Gutes kann es erforderlich oder vorteilhaft sein, der erfindungsgemäßen Zerkleinerungsvorrichtung 10 noch eine weitere Zerkleinerungsvorrichtung 64 zur Grobzerkleinerung vorzuordnen, beispielsweise die aus der EP 0 606 891 B1 bekannte Zerkleinerungsvorrichtung.

Zum Verfahrensablauf im Einzelnen:

Das zu zerkleinernde Gut wird bei 66 in die Zerkleinerungsvorrichtung 64 zur Grobzerkleinerung eingebracht. Das aus dieser bei 68 ausgegebene, grob zerkleinerte Gut wird einem Sichter 70 zugeführt, welcher Leichtstoff aussondert und bei 72 ausleitet. Das restliche Gut wird der Zuführung 30 der erfindungsgemäßen Zerkleinerungsvorrichtung 10 zur Vorzerkleinerung zugeführt. Das über den Auffangtrichter 36 ausgegebene vorzerkleinerte Gut wird einem weiteren Sichter 74 zugeführt, der wiederum Leichtstoffe aussondert.

Um ein Verstopfen und somit Blockieren der Zerkleinerungsvorrichtung 10 zu verhindern, wird nicht ausreichend zerkleinertes Gut über die seitliche Öffnung 40 ausgeworfen und über den Förderweg 41 zur Zuführung 30 zurückgeführt. Gegebenenfalls kann unzerkleinerbares Gut vollständig ausgesondert und bei 76 ausgeleitet werden.

Bevor das vom Sichter 74 zur Hauptzerkleinerung vorgesehene Gut bei 78 der Zerkleinerungsvorrichtung 62 zur Endzerkleinerung zugeführt wird, werden in einem Magnetscheider 80 noch ferromagnetische Teile ausgesondert und bei 82 ausgeleitet.

Auch die Zerkleinerungsvorrichtung 62 kann im teilweisen Kreislauf betrieben werden, d.h. nicht ausreichend zerkleinertes Gut kann über einen Förderweg 79 zur Zuführung 78 der Zerkleinerungsvorrichtung 62 zurückgeführt werden. Im Anschluss an die Haupt- bzw. Endzerkleinerung findet eine weitere Sichtung in einem Sichter 84 sowie eine weitere Abscheidung ferromagnetischer Teile in einem Magnetscheider 86 statt, bevor das restliche, endzerkleinerte Gut einer Klassiervorrichtung 88 und einer Sortiervorrichtung 90 zugeführt wird. Sollte auf Grund nicht ausreichender körperlicher Trennung unterschiedlicher Materialien eine Klassierung bestimmter Fraktionen des zerkleinerten Gutes nicht möglich sein, so kann diese nicht zu klassierende Fraktion über einen Förderweg 89 wieder zur Zuführung 78 der Zerkleinerungsvorrichtung 62 zurückgeführt werden.

## Patentansprüche

1. Zerkleinerungsvorrichtung (10), umfassend:
- einen Zerkleinerungsraum (12) mit einer Bodenwandung (16) und einer von der Bodenwandung (16) nach oben abstehenden Umfangswandung (14),
- eine im Wesentlichen orthogonal zur Bodenwandung (16) verlaufende drehantreibbare Antriebswelle (22),
- wenigstens ein der Bodenwand (16) benachbart angeordnetes, von der Antriebswelle (22) in eine Umlaufbewegung um die Antriebswelle (22) versetzbares Zerkleinerungselement (28a), und
- eine Mehrzahl weiterer, von der Antriebswelle (22) in eine Umlaufbewegung um die Antriebswelle (22) versetzbare Zerkleinerungselemente (28b), welche oberhalb des der Bodenwandung (16) benachbarten Zerkeinerungselements (28a) angeordnet sind,
wobei zumindest ein Teil der Umfangswandung (14) des Zerkleinerungsraums (12) als Rost (32) ausgebildet ist, und wobei dieser Rost (32) von einem äußeren Mantel (34) umgeben ist, an dessen unterem Ende eine, vorzugsweise trichterförmig ausgebildete, Auffangvorrichtung (36) für zerkleinertes Gut vorgesehen ist,
**dadurch gekennzeichnet, dass** in der Umfangswandung (14) des Zerkleinerungsraums (12) eine dessen Bodenwandung (16) benachbarte, wahlweise öffenbare und schließbare und als zusätzliche Austragsöffnung nutzbare Öffnung (40) vorgesehen ist.

2. Zerkleinerungsvorrichtung nach Anspruch 1, ,
**dadurch gekennzeichnet, dass** der Rost (32) aus einer Mehrzahl von, vorzugsweise vertikal verlaufenden, Leisten (32a) gebildet ist, die mit einem vorbestimmten Abstand (d₂) voneinander angeordnet sind, der beispielsweise etwa 38 mm beträgt.

3. Zerkleinerungsvorrichtung nach Anspruch 1 oder 2,
**dadurch gekennzeichnet, dass** der äußere Mantel (34) vom Rost (32) einen vorbestimmten Mindestabstand aufweist, der beispielsweise etwa 200 mm beträgt.

4. Zerkleinerungsvorrichtung nach einem der Ansprüche 1 bis 3,
**dadurch gekennzeichnet, dass** wenigstens ein Umfangsabschnitt des äußeren Mantels (34), vorzugsweise um eine im Wesentlichen vertikal verlaufende Achse (A), schwenkbar ausgebildet ist.

5. Zerkleinerungsvorrichtung nach einem der Ansprüche 1 bis 4,
**dadurch gekennzeichnet, dass** wenigstens ein Umfangsabschnitt des Rostes (32), vorzugsweise um eine im Wesentlichen vertikal verlaufende Achse (A), schwenkbar ausgebildet ist

6. Zerkleinerungsvorrichtung nach einem der Ansprüche 1 bis 5,
**dadurch gekennzeichnet, dass** ein schwenkbarer Umfangsabschnitt des Rostes (32) und ein schwenkbarer Umfangsabschnitt des äußeren Mantels (34) eine gemeinsam handhabbare Einheit (50) bilden.

7. Zerkleinerungsvorrichtung nach einem der Ansprüche 1 bis 6,
**dadurch gekennzeichnet, dass** der äußere Mantel (34) eine polygonale, vorzugsweise eine achteckige, Kontur aufweist.

8. Zerkleinerungsvorrichtung nach einem der Ansprüche 1 bis 7,
**dadurch gekennzeichnet, dass** zumindest ein Teil der Bodenwandung (16) als Rost ausgebildet ist.

9. Zerkleinerungsvorrichtung nach einem der Ansprüche 1 bis 8,
**dadurch gekennzeichnet, dass** wenigstens ein Zerkleinerungselement (28), vorzugsweise das der Bodenwandung (16) benachbarte Zerkleinerungselement (28a), von einer Kette gebildet ist.

10. Zerldeinerungsvorrichtung nach einem der Ansprüche 1 bis 9,
**dadurch gekennzeichnet, dass** wenigstens ein Zerkleinerungselement (28) von einer Schlagleiste (28b) gebildet ist.

11. Zerkleinerungsvorrichtung nach Anspruch 10,
**dadurch gekennzeichnet, dass** die Schlagleiste (28b) mit der Antriebswelle (22) gelenkig, vorzugsweise um eine zur Antriebswelle (22) vorzugsweise parallel verlaufende Achse (A) schwenkbar, verbunden ist.

12. Zerkleinerungsvorrichtung nach einem der Ansprüche 1 bis 11,
**dadurch gekennzeichnet, dass** die Zerkteinerungselemente (28) an der Antriebswelle (22) schraubenartig angeordnet sind, vorzugsweise derart, dass ein der Bodenwandung (16) näheres Zerkleinerungselement (28) bezogen auf ein von der Bodenwandung (16) entfemteres Zerkleinerungselement (28) in Umlaufrichtung um die Antriebswelle (22) vorauslaufender angeordnet ist.

13. Zerkleinerungsvorrichtung nach einem der Ansprüche 1 bis 12,
**dadurch gekennzeichnet, dass** die Antriebswelle (22) eine Sechskant-Welle ist.

14. Zerkleinerungsvorrichtung nach einem der Ansprüche 1 bis 13,
**dadurch gekennzeichnet, dass** die Zerkleinerungselemente (28) an der Antriebswelle (22) in Zerkleinerungselement-Ebenen angeordnet sind, welche voneinander einen vorbestimmten Mindestabstand (d₁) aufweisen, der beispielsweise etwa 120 mm beträgt.

15. Zerkleinerungsvorrichtung nach einem der Ansprüche 1 bis 14,
**dadurch gekennzeichnet, dass** zwischen dem freien Ende wenigstens eines der Zerkleinerungselemente (28) und der Umfangswandung (14) ein vorbestimmter Abstand (d₃) vorgesehen ist.

16. Zerkleinerungsvorrichtung nach einem der Ansprüche 1 bis 15,
**dadurch gekennzeichnet, dass** wenigstens ein von der Umfangswandung (14) nach innen abstehender, vorzugsweise trichterförmig ausgebildeter, Ringansatz (38) vorgesehen ist.

17. Zerkleinerungsvorrichtung nach einem der Ansprüche 1 bis 16,
**dadurch gekennzeichnet, dass** im Bereich des oberen Randes der Umfangswandung (14) eine Zufuhröffnung (30) zur Zufuhr von zu zerkleinerndem Gut vorgesehen ist.

18. Zerkleinerungsvorrichtung nach Anspruch 17,
**dadurch gekennzeichnet, dass** sich die Zufuhröffnung (30) vom oberen Rand der Umfangswandung (14) über eine vorbestimmte Distanz in Richtung Bodenwandung (16) erstreckt.

19. Zerkleinerungsvorrichtung nach einem der Ansprüche 1 bis 18,
**dadurch gekennzeichnet, dass** in der obersten Zerkleinerungselement-Ebene und gewünschtenfalls auch in wenigstens einer darunter angeordneten Zerkleinerungselement-Ebene lediglich ein Zerkleinerungselement (28) vorgesehen ist.

20. Zerkleinerungsvorrichtung nach einem der Ansprüche 1 bis 19,
**dadurch gekennzeichnet, dass** zumindest das wenigstens eine oberste Zerkleinerungselement (28b') kürzer ausgebildet ist als die restlichen Zerkleinerungselemente (28).

21. Zerkleinerungsvorrichtung nach einem der Ansprüche 17 bis 20,
**dadurch gekennzeichnet, dass** ein der Zufuhröffnung (30) vorgeordneter Zufuhrkanal abgewinkelt ausgebildet ist.

22. Zerkleinerungsvorrichtung nach einem der Ansprüche 1 bis 21,
**dadurch gekennzeichnet, dass** die Antriebswelle (22) sowohl an der Bodenwandung (16) als auch an einer Deckenwandung (18) des Zerkleinerungsraums (12) drehbar gelagert ist.

23. Zerkleinerungsvonichtung nach einem der Ansprüche 1 bis 22,
**dadurch gekennzeichnet, dass** der Antriebsmotor (24) mit der Antriebswelle (22) über einen Riemenantrieb (26) verbunden ist.

24. Zerkleinerungsvorrichtung nach einem der Ansprüche 1 bis 23,
**dadurch gekennzeichnet, dass** die Drehzahl der Antriebswelle (22) zwischen etwa 200 U/min und etwa 2000 U/min, vorzugsweise zwischen etwa 500 U/min und etwa 1000 U/min, beträgt.

25. Zerkleinerungsvorrichtung nach einem der Ansprüche 1 bis 24,
**dadurch gekennzeichnet, dass** sie eine Anschlussöffnung (48) für eine Absaugvorrichtung (49) aufweist.

## Claims

1. Comminuting device (10), comprising
- a comminution chamber (12) having a bottom wall (16) and a circumferential wall (14) projecting upward from the bottom wall (16),
- a rotationally drivable drive shaft (22) extending essentially orthogonal to the bottom wall (16),
- at least one comminution element (28a) arranged adjacent the bottom wall (16) and able to be set in rotating motion about the drive shaft (22) by the drive shaft (22),
- a plurality of additional comminution elements (28b) able to be set in rotating motion about the drive shaft (22) by the drive shaft (22) are provided above the comminution element (28a) adjacent the bottom wall (16),
wherein at least one portion of the circumferential wall (14) of the comminution chamber (12) is in the form of a grating (32), and wherein this grating (32) is surrounded by an outer casing (34), at the lower end of which a collecting device (36) of preferably funnel-shaped configuration is provided for comminuted material,
**characterised in that**, in the circumferential wall (14) of the comminution chamber (12), an opening (40) adjacent the latter's bottom wall (16) and openable and closable at will is provided.

2. Comminuting device according to Claim 1, **characterised in that** the grating (32) is formed by a plurality of bars (32a) which preferably extend vertically and which are arranged at a predetermined distance (d₂) apart, amounting to about 38 mm, for example.

3. Comminuting device according to Claim 1 or 2, **characterised in that that** the outer casing (34) has a predetermined minimum distance from the grating (32), for example about 200 mm.

4. Comminuting device according to any one of Claims 1 to 3, **characterised in that** at least one circumferential segment of the outer casing (34) is pivotable, preferably about an axis (A) extending essentially vertically.

5. Comminuting device according to any one of Claims 1 to 4, **characterised in that** at least one circumferential segment of the grating (32) is pivotable, preferably about an axis (A) extending essentially vertically.

6. Comminuting device according to any one of Claims 1 to 5, **characterised in that** a pivotable circumferential segment of the grating (32) and a pivotable circumferential segment of the outer casing (34) form a unit (50) which can be jointly handled.

7. Comminuting device according to any one of Claims 1 to 6, **characterised in that** the outer casing (34) has a polygonal, preferably an octagonal, contour.

8. Comminuting device according to any one of Claims 1 to 7, **characterised in that** at least one portion of the bottom wall (16) is in the form of a grating.

9. Comminuting device according to any one of Claims 1 to 8, **characterised in that** at least one comminution element (28), preferably the comminution element (28a) adjacent the bottom wall (16), is formed by a chain.

10. Comminuting device according to any one of Claims 1 to 9, **characterised in that** at least one comminution element (28) is formed by an impact bar (28b).

11. Comminuting device according to Claim 10, **characterised in that** the impact bar (28b) is articulated to the drive shaft (22), preferably is pivotable about an axis (A) preferably extending parallel to the drive shaft (22).

12. Comminuting device according to any one of Claims 1 to 11, **characterised in that** the comminution elements (28) are arranged helically on the drive shaft (22), preferably in such manner that a comminution element (28) nearer the bottom wall (16) in relation to a comminution element (28) more distant from the bottom wall (16) is arranged to extend forwards in the direction of rotation about the drive shaft (22).

13. Comminuting device according to any one of Claims 1 to 12, **characterised in that** the drive shaft (22) is a hexagonal shaft.

14. Comminuting device according to any one of Claims 1 to 13, **characterised in that** the comminution elements (28) are arranged on the drive shaft (22) in planes of comminution elements, having a predetermined minimum distance (d₁) from each other, amounting for example to about 120 mm.

15. Comminuting device according to any one of Claims 1 to 14, **characterised in that** a predetermined distance (d₃) is provided between the free end of at least one of the comminution elements (28) and the circumferential wall (14).

16. Comminuting device according to any one of Claims 1 to 15, **characterised in that** at least one annular attachment (38) projecting inward from the circumferential wall (14), preferably of funnel-shaped configuration, is provided.

17. Comminuting device according to any one of Claims 1 to 16, **characterised in that**, in the vicinity of the upper edge of the circumferential wall (14), an inlet opening (30) is provided for the supply of material to be comminuted.

18. Comminuting device according to Claim 17, **characterised in that** the inlet opening (30) extends from the upper edge of the circumferential wall (14) over a predetermined distance towards the bottom wall (16).

19. Comminuting device according to any one of Claims 1 to 18, **characterised in that**, in the uppermost plane of the comminution elements and, if desired, also in at least one plane of the comminution elements arranged thereunder, only one comminution element (28) is provided.

20. Comminuting device according to any one of Claims 1 to 19, **characterised in that** at least the at least one uppermost comminution element (28b') is shorter than the remaining comminution elements (28).

21. Comminuting device according to any one of Claims 17 to 20, **characterised in that** an inlet passage preceding the inlet opening (30) is of angled configuration.

22. Comminuting device according to any one of Claims 1 to 21, **characterised in that** the drive shaft (22) is rotatably mounted both on the bottom wall (16) and on a ceiling wall (18) of the comminution chamber (12).

23. Comminuting device according to any one of Claims 1 to 22, **characterised in that** the drive motor (24) is connected to the drive shaft (22) by way of a belt drive (26).

24. Comminuting device according to any one of Claims 1 to 23, **characterised in that** the speed of the drive shaft (22) is between about 200 rpm and about 2,000 rpm, preferably between about 500 rpm and about 1,000 rpm.

25. Comminuting device according to any one of Claims 1 to 24, **characterised in that** it has a connection opening (48) for an extraction device (49).

## Revendications

1. Dispositif de broyage (10), comprenant :
- une chambre de broyage (12) avec une paroi de fond (16) et une paroi périphérique (14) se dressant vers le haut depuis la paroi de fond (16),
- un arbre d'entraînement (22) entraînable en rotation et s'étendant sensiblement perpendiculairement à la paroi de fond (16),
- au moins un élément de broyage (28a) placé au voisinage de la paroi de fond (16) et pouvant être mis en mouvement de circulation autour de l'arbre d'entraînement (22) par l'arbre d'entraînement (22) lui-même, et
- une pluralité d'autres éléments de broyage (28b) pouvant être mis en mouvement de circulation autour de l'arbre d'entraînement (22) par l'arbre d'entraînement (22) lui-même, éléments qui sont placés au-dessus de l'élément de broyage (28a) voisin de la paroi de fond (16),
dans lequel au moins une partie de la paroi périphérique (14) de la chambre de broyage (12) est conformée en grille (32), cette grille étant entourée d'une enveloppe extérieure (34) à l'extrémité inférieure de laquelle est prévu un dispositif de collecte (36) conformé de préférence en entonnoir pour une matière broyée,
**caractérisé en ce qu'**il est prévu dans la paroi périphérique (14) de la chambre de broyage (12) une ouverture (40) voisine de sa paroi de fond (16), pouvant être ouverte et fermée au choix et pouvant servir d'ouverture d'évacuation supplémentaire.

2. Dispositif de broyage selon la revendication 1, **caractérisé en ce que** la grille (32) est formée d'une pluralité de baguettes (32a) s'étendant de préférence verticalement, qui sont placées à une distance (d₂) prédéterminée les unes des autres, qui vaut par exemple environ 38 mm.

3. Dispositif de broyage selon la revendication 1 ou 2, **caractérisé en ce que** l'enveloppe extérieure (34) de la grille (32) présente une distance minimale prédéterminée, qui vaut par exemple environ 200 mm.

4. Dispositif de broyage selon l'une des revendications 1 à 3, **caractérisé en ce qu'**au moins une section périphérique de l'enveloppe extérieure (34) est réalisée pivotante, de préférence autour d'un axe (A) s'étendent sensiblement verticalement.

5. Dispositif de broyage selon l'une des revendications 1 à 4, **caractérisé en ce qu'**au moins une section périphérique de la grille (32) est réalisée pivotante, de préférence autour d'un axe (A) s'étendant sensiblement verticalement.

6. Dispositif de broyage selon l'une des revendications 1 à 5, **caractérisé en ce qu'**une section périphérique pivotante de la grille (32) et une section périphérique pivotante de l'enveloppe extérieure (34) forment une unité (50) manipulable d'une façon commune.

7. Dispositif de broyage selon l'une des revendications 1 à 6, **caractérisé en ce que** l'enveloppe extérieure (34) présente un contour polygonal, de préférence octaédrique.

8. Dispositif de broyage selon l'une des revendications 1 à 7, **caractérisé en ce qu'**au moins une partie de la paroi de fond (16) est conformée en grille.

9. Dispositif de broyage selon l'une des revendications 1 à 8, **caractérisé en ce qu'**au moins un élément de broyage (28), de préférence l'élément de broyage (28a) voisin de la paroi de fond (16), est formé par une chaîne.

10. Dispositif de broyage selon l'une des revendications 1 à 9, **caractérisé en ce qu'**au moins un élément de broyage (28) est formé par un battoir (28b).

11. Dispositif de broyage selon la revendication 10, **caractérisé en ce que** le battoir (28b) est relié à l'arbre d'entraînement (22) de manière articulée, de préférence de manière pivotante autour d'un axe (A) s'étendant de préférence parallèlement à l'arbre d'entraînement (22).

12. Dispositif de broyage selon l'une des revendications 1 à 11, **caractérisé en ce que** les éléments de broyage (28) sont disposés en hélice sur l'arbre d'entraînement (22), de préférence de telle manière qu'un élément de broyage (28) plus proche de la paroi de fond (16) est placé, par rapport à un élément de broyage (28) plus éloigné de la paroi de fond (16), en amont dans la direction de circulation autour de l'arbre d'entraînement (22).

13. Dispositif de broyage selon l'une des revendications 1 à 12, **caractérisé en ce que** l'arbre d'entraînement (22) est un arbre hexagonal.

14. Dispositif de broyage selon l'une des revendications 1 à 13, **caractérisé en ce que** les éléments de broyage (28) sont placés sur l'arbre d'entraînement (22) dans des plans d'éléments de broyage qui présentent entre eux une distance minimale (d₁) prédéterminée, qui vaut par exemple environ 120 mm.

15. Dispositif de broyage selon l'une des revendications 1 à 14, **caractérisé en ce qu'**entre l'extrémité libre d'au moins l'un des éléments de broyage (28) et la paroi périphérique (14) est prévue une distance prédéterminée (d₃).

16. Dispositif de broyage selon l'une des revendications 1 à 15, **caractérisé en ce qu'**il est prévu au moins une embase annulaire (38) formant saillie vers l'intérieur depuis la paroi périphérique (14) et réalisée de préférence en forme d'entonnoir.

17. Dispositif de broyage selon l'une des revendications 1 à 16, **caractérisé en ce qu'**au niveau du bord supérieur de la paroi périphérique (14) est prévue une ouverture d'introduction (30) pour introduire la matière à broyer.

18. Dispositif de broyage selon la revendication 17, **caractérisé en ce que** l'ouverture d'introduction (30) s'étend depuis le bord supérieur de la paroi périphérique (14) sur une distance prédéterminée en direction de la paroi de fond (16).

19. Dispositif de broyage selon l'une des revendications 1 à 18, **caractérisé en ce qu'**un seul élément de broyage est prévu dans le plan d'éléments de broyage supérieur et, si on le souhaite, également dans au moins l'un des plans d'éléments de broyage situés au-dessous.

20. Dispositif de broyage selon l'une des revendications 1 à 19, **caractérisé en ce que** l'élément de broyage supérieur (28b') au nombre d'au moins un est réalisé plus court que les autres éléments de broyage (28).

21. Dispositif de broyage selon l'une des revendications 17 à 20, **caractérisé en ce qu'**un canal d'introduction placé en amont de l'ouverture d'introduction (30) est réalisé coudé.

22. Dispositif de broyage selon l'une des revendications 1 à 21, **caractérisé en ce que** l'arbre d'entraînement (22) est monté de manière pivotante tant sur la paroi de fond (16) que sur une paroi de plafond (18) de la chambre de broyage (12).

23. Dispositif de broyage selon l'une des revendications 1 à 22, **caractérisé en ce que** le moteur d'entraînement (24) est relié à l'arbre d'entraînement (22) par une liaison à courroie (26).

24. Dispositif de broyage selon l'une des revendications 1 à 23, **caractérisé en ce que** la vitesse de rotation de l'arbre d'entraînement (22) vaut entre environ 200 trs/min et environ 2000 trs/min, de préférence entre environ 500 trs/min et environ 1000 trs/min.

25. Dispositif de broyage selon l'une des revendications 1 à 24, **caractérisé en ce qu'**il présente une ouverture de raccordement (48) pour un dispositif d'aspiration (49).
